(19) Europäisches Patentamt
European Patent Office
Office européen des brevets

(11) Publication number: 0 501 440 A1

# (12) EUROPEAN PATENT APPLICATION

(21) Application number: 92103253.8

(22) Date of filing: 26.02.92

(51) Int. Cl.5: C10M 169/04, C10M 171/00, C09K 5/04, //(C10M169/04, 105:42,129:18,133:44,137:02), C10N40:30

(30) Priority: 26.02.91 JP 30850/91

(43) Date of publication of application: 02.09.92 Bulletin 92/36

(84) Designated Contracting States: DE FR GB

(71) Applicant: KAO CORPORATION
14-10, Nihonbashi Kayabacho 1-chome
Chuo-ku Tokyo(JP)

(72) Inventor: Hagihara, Toshiya
10-20-702, Ue-machi 2-chome
Izumisano-shi, Osaka(JP)

Inventor: Sakai, Akimitsu
450-445,Nishihama
Wakayama-shi, Wakayama(JP)
Inventor: Suzuki, Hideo
1450, Nishihama
Wakayama-shi, Wakayama(JP)

(74) Representative: Hansen, Bernd, Dr.
Dipl.-Chem. et al
Hoffmann, Eitle & Partner Patent- und
Rechtsanwälte Arabellastrasse 4 Postfach
81 04 20
W-8000 München 81(DE)

## (54) Composition for refrigerator working fluid use.

(57) This invention provides a refrigerator working fluid composition characterized by excellent compatibility, lubricating ability, thermal stability, and electrical insulation capacity, and comprising a refrigerating machine oil and a hydrofluorocarbon compound, wherein the refrigerating machine oil comprises:

(A) 100 parts by weight of at least one ester compound selected from the group consisting of:

(1) ester compounds obtained from

(a) an aliphatic polyhydric alcohol having 1 to 6 primary hydroxyl groups,

(b) a straight or branched chain saturated aliphatic monocarboxylic acid having 2 to 9 carbon atoms or a derivative thereof, and

(c) a straight or branched chain saturated aliphatic dicarboxylic acid having 2 to 10 carbon atoms or a derivative thereof; and

(2) ester compounds obtained from

(a) an aliphatic polyhydric alcohol having 1 to 6 primary hydroxyl groups,

(d) a straight or branched chain saturated aliphatic monohydric alcohol having 1 to 10 carbon atoms, and

(e) a polycarboxylic acid having 2 to 10 carbon atoms or a derivative thereof; and

(B) at least one compound selected from the group consisting of 0.1 to 5.0 parts by weight of a triaryl phosphate, a triaryl phosphite, or a mixture thereof; 0.001 to 0.1 parts by weight of benzotriazole, a derivative thereof, or a mixture thereof; 0.05 to 2.0 parts by weight of an epoxy group-containing compound; and 0.001 to 2.0 parts by weight of a metal deactivator having a chelating function.

EP 0 501 440 A1

## FIELD OF THE INVENTION

This invention relates to a refrigerator working fluid composition. More particularly, the invention relates to a refrigerator working fluid composition for use in compression refrigerating machines such as electric refrigerators and the like.

## BACKGROUND OF THE INVENTION

For the purpose of protecting ozone layers, restrictions have recently been put on the use of dichlorodifluoromethane (CFC 12) which are useful as refrigerants in refrigerators, car air conditioners and the like. A plan has been proposed to prohibit the use of CFC 12 in the future. Because of this, hydrofluorocarbons, for example 1,1,1,2-tetrafluoroethane (HFC 134a) useful as a refrigerant, which do not adversely affect the ozone layer, have been developed as a substitute for CFC 12.

However, since hydrofluorocarbons have a high polarity in comparison with CFC 12, they are insufficiently compatible with lubricating oils generally used as refrigerating machine oils, such as naphthene-based mineral oil, poly-$\alpha$-olefine, alkylbenzene and the like. Therefore, two-phase separation results when a hydrofluorocarbon is used together with a machine oil at a low temperature. This two-phase separation causes serious problems, such as poor oil return, obstruction of heat transfer due to the deposition of thick oil layers on the condenser and evaporator used as a heat exchanger, poor lubricating effect, bubbling at the time of activation and the like. Because of these problems, current refrigerating machine oils cannot be used with the new refrigerant.

CFC 12 generates hydrogen chloride by partial decomposition. The generated hydrogen chloride reacts with a friction area to form a chloride membrane, thus imparting the effect of improved lubricating ability. However, since such an effect cannot be expected from the hydrofluorocarbon which does not contain a chlorine atom, the refrigerating machine oil to be used together with the hydrofluorocarbon, must have more improved lubricating ability than those of oils generally used.

Also, the refrigerating machine oil to be used together with a hydrofluorocarbon should have a high thermal stability in the presence of the hydrofluorocarbon.

In addition to these requirements, since the motor used in the compression refrigerating machines of electric refrigerators contains organic materials, such as insulations, enameled wires and the like, a working fluid which comprises a hydrofluorocarbon and a refrigerating machine oil should be prepared in such a manner so that it does not exert a negative influence on these organic materials. The working fluid should also possess proper electrical insulation capacity.

As the refrigerating machine oils which can be used together with a hydrofluorocarbon, such as 1,1,1,2-tetrafluoroethane (HFC 134a), polyether compounds have been disclosed, for instance, in U.S. Patent 4,755,316, JP-A-1-198694, JP-A-1-256594, JP-A-1-259093, JP-A-1-259094, JP-A-1-259095, U.S. Patent No. 4,948,525 (corresponding to JP-A-2-84491), JP-A-2-102296, JP-A-2-129294, JP-A-2-132176, JP-A-2-173195, JP-A-2-242823, EP-A-377,122 (corresponding to JP-A-2-281098, JP-A-2-258896, and JP-A-242888), WO 90/05172 (corresponding to JP-A-2-182780, JP-A-2-180987, JP-A-2-180986, JP-A-2-132179, JP-A-2-132178, and JP-A-2-132177), U.S. Patent No. 5,021,180 (corresponding to JP-A-2-269195), EP-A-386,851 (corresponding to JP-A-2-272097). (The term "JP-A" as used herein means an "unexamined published Japanese patent publication".)

Though each of these polyether compounds has excellent compatibility with HFC 134a at a low temperature because of its high polarity in comparison with naphthene based mineral oils, the polyether compound causes two-phase separation when used at a high temperature, as described in U.S. Patent 4,755,316. Such polyether compounds, therefore, cannot be used safely as refrigerating machine oils.

In addition to this, these polyether compounds have some other disadvantages. For example, the polyether compounds possess poor electrical insulation capacity, which renders impossible the use of the polyether compound in a refrigerating machine for electric refrigerator use. Another problem is the compounds' highly hygroscopic nature. The water absorbed in the polyether compound causes deterioration of thermal stability in the presence of HFC 134a, and further causes the hydrolysis of organic materials, such as PET films and the like. Also, the polyether compound is not sufficient as a lubricant. That is, the lubricating ability of a hydrofluorocarbon (HFC 134a for example) refrigerant - polyether compound system is inferior to that of the CFC 12 - naphthene based mineral oil system which is normally used.

With the aim of overcoming these problems involved with the polyether compounds, such as poor electrical insulation capacity, high hygroscopicity, inferior lubricating ability and the like, ester compounds have been developed which have excellent compatibility with hydrofluorocarbons and high thermal stability in the presence of hydrofluorocarbons. Compared to polyether compounds, these ester compounds also

have markedly excellent electrical insulation capacity, fairly low hygroscopicity and excellent lubricating ability (cf., U.S. Patents Nos. 5,008,028 and 4,851,144, GB-A-2,216,541, WO 90/12849, and EP-A-406,479).

However, compared to the CFC 12 - mineral oil system usually used as the working fluid, the hydrofluorocarbon - ester oil system shows high polarity both in the hydrofluorocarbon and the oil, and is apt to contain water. Though a refrigerating machine is normally equipped with a dryer which removes water by the use of a molecular sieve, there is a possibility that the water remaining due to insufficient drying will cause hydrolysis of the ester compound, thereby forming carboxylic acids which subsequently cause corrosion and abrasion of metals and generation of coppering.

As described above, virtually nothing is known about prior art compositions for use in refrigerating machines of an electric refrigerator and the like, comprising a hydrofluorocarbon and an oil, which can satisfy the necessary properties of compatibility, lubricating ability, thermal stability, electrical insulation capacity and the like.

## SUMMARY OF THE INVENTION

Therefore, it is an object of the present invention to provide a refrigerator working fluid composition for use in refrigerating machines, characterized by the excellent properties of compatibility, lubricating ability, thermal stability, electrical insulation capacity and the like.

The inventors of the present invention have conducted intensive studies and have found that the above object can be attained by the use of a specific ester compound and a specific compound added thereto.

Thus, the present invention provides a refrigerator working fluid composition comprising a refrigerating machine oil and a hydrofluorocarbon compound, wherein the refrigerating machine oil comprises:

(A) 100 parts by weight of at least one ester compound selected from the group consisting of:

(1) ester compounds obtained from

(a) an aliphatic polyhydric alcohol having 1 to 6 primary hydroxyl groups,

(b) a straight or branched chain saturated aliphatic monocarboxylic acid having 2 to 9 carbon atoms or a derivative thereof, and

(c) a straight or branched chain saturated aliphatic dicarboxylic acid having 2 to 10 carbon atoms or a derivative thereof; and

(2) ester compounds obtained from

(a) an aliphatic polyhydric alcohol having 1 to 6 primary hydroxyl groups,

(d) a straight or branched chain saturated aliphatic monohydric alcohol having 1 to 10 carbon atoms, and

(e) a polycarboxylic acid having 2 to 10 carbon atoms or a derivative thereof; and

(B) at least one compound selected from the group consisting of 0.1 to 5.0 parts by weight of a triaryl phosphate, a triaryl phosphite, or a mixture thereof; 0.001 to 0.1 parts by weight of benzotriazole, a derivative thereof, or a mixture of benzotriazole and a derivative thereof; 0.05 to 2.0 parts by weight of an epoxy group-containing compound; and 0.001 to 2.0 parts by weight of a metal deactivator having a chelating function.

The inventive composition which comprises a hydrofluorocarbon compound and a refrigerating machine oil, comprising ester compounds (1) and/or (2) and additive agents, possesses excellent compatibility, lubricating ability, thermal stability and electrical insulation capacity.

Other objects and advantages will be made apparent as the description progresses.

## DETAILED DESCRIPTION OF THE INVENTION

The aliphatic polyhydric alcohol to be used as component (a) for the preparation of the ester compound of the present invention has 1 to 6 primary hydroxyl groups. Illustrative examples of such alcohols include hindered alcohols such as neopentyl glycol, 2,2-diethyl-1,3-propanediol, 2-n-butyl-2-ethyl-1,3-propanediol, trimethylolethane, trimethylolpropane, trimethylolnonane, pentaerythritol, dipentaerythritol and the like; and polyhydric alcohols such as ethylene glycol, diethylene glycol, polyethylene glycol, propylene glycol, dipropylene glycol, polypropylene glycol, 1,3-propanediol, 1,2-butanediol, 1,4-butanediol, 1,6-hexanediol, 2-ethyl-1,3-hexanediol, glycerol, diglycerol, polyglycerol, 1,2,4-butanetriol, 1,2,6-hexanetriol, sorbitol, mannitol and the like. Each of these aliphatic polyhydric alcohols may have 2 to 30, preferably 2 to 20, more preferably 2 to 10, carbon atoms. If the number of carbon atoms exceeds 30, a high viscosity and poor compatibility with the hydrofluorocarbon based refrigerant result. Each of these aliphatic polyhydric alcohols may have 2 to 6, preferably 2 to 3, hydroxyl groups. If the number of hydroxyl groups exceeds 6, the result is too high a viscosity. Among these illustrative examples, hindered alcohols are particularly preferred from

a thermal resistance point of view.

The saturated aliphatic monocarboxylic acid to be used as component (b) for the preparation of the ester compound of the present invention, has 2 to 9, preferably 5 to 9, carbon atoms. Illustrative examples of such monocarboxylic acids and their derivatives include acetic acid, propionic acid, butyric acid, isobutyric acid, valeric acid, isovaleric acid, pivalic acid, 2-methylbutylic acid, caproic acid, 2-methylvaleric acid, 3-methylvaleric acid, 4-methylvaleric acid, 2,2-dimethylbutylic acid, 2-ethylbutylic acid, tert-butylacetic acid, enanthic acid, 2,2-dimethylpentanoic acid, 2-ethylpentanoic acid, 3-ethylpentanoic acid, 2-methylhexanoic acid, 3-methylhexanoic acid, 4-methylhexanoic acid, 5-methylhexanoic acid, caprylic acid, 2-ethylhexanoic acid, 3,5-dimethylhexanoic acid, 2,2-dimethylhexanoic acid, 2-methylheptanoic acid, 3-methylheptanoic acid, 4-methylheptanoic acid, 2-propylpentanoic acid, pelargonic acid, 2,2-dimethylheptanoic acid, 3,5,5-trimethylhexanoic acid, 2-methyloctanoic acid, 2-ethylheptanoic acid, 3-methyloctanoic acid, and their methyl esters, ethyl esters, acid anhydrides and the like. Of these compounds, branched chain saturated fatty acids are preferable over straight chain saturated fatty acids, in view of their compatibility with hydrofluorocarbon-based refrigerants and their hydrolysis resistance. If the number of carbon atoms exceeds 9, poor compatibility with hydrofluorocarbon based refrigerants results. If the number of carbon atoms is less than 2, an increase in the corrosiveness of metals results. A compound having an unsaturated bond is not preferable from a thermal resistance point of view.

The saturated aliphatic dicarboxylic acid to be used as component (c) for the preparation of the ester compound of the present invention has 2 to 10 carbon atoms. If the number of carbon atoms exceeds 10, the result is poor compatibility with hydrofluorocarbon based refrigerants. Illustrative examples of such dicarboxylic acids and derivatives thereof include oxalic acid, malonic acid, methylmalonic acid, succinic acid, ethylmalonic acid, dimethylmalonic acid, methylsuccinic acid, glutaric acid, adipic acid, 2,2-dimethylsuccinic acid, 2,3-dimethylsuccinic acid, 2-methylglutaric acid, 3-methylglutaric acid, butylmalonic acid, diethylmalonic acid, 2,2-dimethylglutaric acid, 2,4-dimethylglutaric acid, 3,3-dimethylglutaric acid, 2-ethyl-2-methylsuccinic acid, 3-methyladipic acid, pimelic acid, suberic acid, 2,2-dimethyladipic acid, azelaic acid, sebacic acid, and their methyl esters, ethyl esters, acid anhydrides and the like.

The saturated aliphatic monohydric alcohol to be used as component (d) for the preparation of the ester compound of the present invention has 1 to 10, preferably 5 to 9, carbon atoms. If the number of carbon atoms exceeds 10, the result is poor compatibility with hydrofluorocarbon based refrigerants. Illustrative examples of such monohydric alcohols include methanol, ethanol, propanol, isopropanol, butanol, 1-methylpropanol, 2-methylpropanol, t-butanol, pentanol, 2-methylbutanol, 3-methylbutanol, 1-ethylpropanol, hexanol, 2-methylpentanol, 2-ethylbutanol, 2,3-dimethylbutanol, heptanol, 2-methylhexanol, 3-methylhexanol, 5-methylhexanol, octanol, 2-ethylhexanol, 2-methylheptanol, 3,5-dimethylhexanol, nonanol, 3,5,5-trimethylhexanol, decylalcohol, 2,4,6-trimethylheptanol and the like.

The polycarboxylic acid to be used as component (e) for the preparation of the ester compound of the present invention has 2 to 10 carbon atoms. If the number of carbon atoms exceeds 10, the result is poor compatibility with hydrofluorocarbon based refrigerants. Illustrative examples of such polycarboxylic acids and derivatives thereof include the saturated aliphatic dicarboxylic acids of the aforementioned component (c); straight chain or branched chain saturated aliphatic polycarboxylic acids such as 1,2,3-tricarboxypropane, $\beta$-methyltricarboxylic acid, 1,3,6-tricarboxyhexane; aromatic polycarboxylic acids such as phthalic acid, terephthalic acid, trimellitic acid, pyromellitic acid and the like; and their methyl esters, ethyl esters, acid anhydrides and the like.

The ester compound (1) to be used for the composition of the present invention is obtained by allowing the aforementioned components (a), (b) and (c) to undergo an esterification reaction. The ester compound (2) is obtained by allowing the aforementioned components (a), (d) and (e) to undergo an esterification reaction.

Compatibility of the ester compounds of the present invention with hydrofluorocarbon-based refrigerants at a low temperature generally becomes poor as the viscosity increases. As a consequence, a preferable ester compound, for purposes of compatibility, may have a kinematic viscosity in the range of from 1 to 100 cSt, more preferably from 1 to 30 cSt, at 100 °C. Also, in view of the compatibility with hydrofluorocarbon-based refrigerants, the ester compounds of the present invention may preferably have a saponification number of at least 330 mg KOH/g, more preferably 350 mg KOH/g or more. A saponification number less than 330 mg KOH/g would result in poor compatibility with hydrofluorocarbon-based refrigerants.

For purposes of lubrication, the ester compounds of the present invention may preferably have a high hydroxyl value, preferably 5 mg KOH/g or more. However, because the ester compound becomes hygroscopic as the hydroxyl value increases, the ester compounds of the present invention may preferably have a hydroxyl value of 50 mg KOH/g or less. More preferably, the ester compounds of the present invention may have a hydroxyl value of from 5 to 30 mg KOH/g.

It may be especially preferable that one or more of the starting materials of the ester compound, namely, (a) the polyhydric alcohol, (b) the aliphatic monocarboxylic acid or a derivative thereof, (c) the aliphatic dicarboxylic acid or a derivative thereof, (d) the monohydric alcohol and (e) the polycarboxylic acid or a derivative thereof, has a branched structure. This structure allows for the improvement of metal corrosion preventing ability and hydrolysis resistance.

An ester compound having excellent low temperature compatibility with hydrofluorocarbon-based refrigerants, as well as markedly excellent lubricating ability, may be obtained when the ester compound (1) is obtained from (f) an aliphatic dihydric alcohol having 1 to 2 primary hydroxyl groups as a member of the component (a), (b) a straight or branched chain saturated aliphatic monocarboxylic acid having 2 to 9 carbon atoms or a derivative thereof, and (g) a straight or branched chain saturated aliphatic dicarboxylic acid having 2 to 8 carbon atoms or a derivative thereof as a member of the component (c), or the ester compound (2) is obtained from (f) an aliphatic dihydric alcohol having 1 to 2 primary hydroxyl groups as a member of the component (a), (d) a straight or branched chain saturated aliphatic monohydric alcohol having 1 to 10 carbon atoms, and (g) a straight or branched chain saturated aliphatic dicarboxylic acid having 2 to 8 carbon atoms or a derivative thereof as a member of the component (e).

Illustrative examples of the just described component (f) include dihydric alcohols, such as ethylene glycol, diethylene glycol, polyethylene glycol, propylene glycol, dipropylene glycol, polypropylene glycol, 1,3-propanediol, 1,2-butanediol, 1,4-butanediol, 1,6-hexanediol, 2-ethyl-1,3-hexanediol and the like. Other examples of the component (f) include hindered alcohols represented by the formula (I) below, such as neopentyl glycol, 2,2-diethyl-1,3-propanediol, 2-n-butyl-2-ethyl-1,3-propanediol and the like. These aliphatic dihydric alcohols may have 2 to 30, preferably 2 to 20, more preferably 2 to 10, carbon atoms. For purposes of thermal resistance, a hindered alcohol represented by the following formula (I) is most preferred.

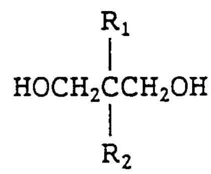 ••• (I)

wherein each of $R_1$ and $R_2$ is an alkyl group having 1 to 6 carbon atoms.

Illustrative examples of the aforementioned component (g) include oxalic acid, malonic acid, methylmalonic acid, succinic acid, ethylmalonic acid, dimethylmalonic acid, methylsuccinic acid, glutaric acid, adipic acid, 2,2-dimethylsuccinic acid, 2,3-dimethylsuccinic acid, 2-methylglutaric acid, 3-methylglutaric acid, butylmalonic acid, diethylmalonic acid, 2,2-dimethylgutaric acid, 2,4-dimethylgutaric acid, 3,3-dimethylgutaric acid, 2-ethyl-2-methylsuccinic acid, 3-methyladipic acid, pimelic acid, suberic acid, 2,2-dimethyladipic acid and the like.

Furthermore, to allow for increased properties of low temperature compatibility with hydrofluorocarbon-based refrigerants, lubricating ability, thermal resistance, hydrolysis resistance and the like, an ester compound which is obtained wherein (a) is neopentyl glycol or 2,2-diethyl-1,3-propanediol, (b) is 2-methylhexanoic acid, and (g) is adipic acid or glutaric acid is most preferable.

The ester compound (1) to be used in the preparation of the composition of the present invention can be obtained in the usual way by esterification reaction or ester interchange (cf. Org. Synth. III, p. 46, p. 146, and p. 605 (1955), etc.), using at least one of the polyhydric alcohols described in the foregoing as illustrative examples of the component (a); at least one of the monocarboxylic acids and their lower alkyl esters, acid anhydrides and the like, described in the foregoing as illustrative examples of the component (b); and at least one of the dicarboxylic acids and their lower alkyl esters, acid anhydrides and the like described in the foregoing as illustrative examples of the component (c). In this instance, the dicarboxylic acid or its derivative may be used in an amount of 0.9 mole or less, more preferably, 0.8 mole or less based on 1 mole of a polyhydric alcohol. If the amount of the dicarboxylic acid or its derivative exceeds 0.9 mole, the result is too high a viscosity. The amount of the monocarboxylic acid or its derivative to be used in the reaction may be decided depending on the amount of the dicarboxylic acid or its derivative and the hydroxyl value of the object ester compound.

The ester compound (2) to be used in the present invention can also be obtained in the usual way by esterification reaction or ester interchange (cf. Org. Synth. III, p. 46, p. 146, and p. 605 (1955), etc.), using at least one of the polyhydric alcohols of component (a); at least one of the monohydric alcohols described in the foregoing as illustrative examples of component (d); and at least one of the polycarboxylic acids and

their lower alkyl esters, acid anhydrides and the like described in the foregoing as illustrative examples of component (e). In this instance, a polyhydric alcohol may be used in an amount of 1.5 moles or less, more preferably, 0.9 mole or less based on 1 mole of polycarboxylic acid or a derivative thereof. If the amount of the polyhydric alcohol exceeds 1.5 moles, the result is too high a viscosity. The amount of the monohydric alcohol to be used in the reaction may be decided depending on the amount of the polyhydric alcohol and the hydroxyl value of the object ester compound.

Preferably, the ester compounds may have low acid value, generally 0.1 mg KOH/g or less, more preferably 0.05 mg KOH/mg or less. If the acid value exceeds 0.1 mg KOH/g, increased metal corrosiveness results.

The ester compounds (1) and (2) of to be used in the present invention may be used either alone or as a mixture of two or more of them.

The composition of the present invention, when it comprises only the ester compound and a hydrofluorocarbon compound, is apt to contain water because of increased polarities of both hydrofluorocarbon and oil. Though a refrigerating machine is equipped with a dryer which removes water by the use of molecular sieve, there is a possibility that the remaining water, as a result of insufficient drying, causes hydrolysis of the ester compound to form carboxylic acids, which subsequently exerts adverse effects.

Consequently, it is effective to mix the composition with an epoxy group-containing compound in order to trap the water in the composition and the formed carboxylic acids. It is also effective to mix the composition with benzotriazole and/or a derivative thereof, or with triaryl phosphate and/or triaryl phosphite, for the purpose of protecting the surface of metals from corrosion by the carboxylic acid. Addition of a triaryl phosphate and/or a triaryl phosphite to the composition allows for improved lubricating ability. Also, the thermal stability of the composition can be improved by the addition of a metal deactivator having a chelating function. Consequently, it is necessary to mix the composition with at least one of these four additive agents, most preferably with the epoxy group-containing compound.

In the case of similar systems in which CFC 12 or monochlorodifluoromethane (HCFC 22) containing chlorine atoms is used, hydrochloric acid is generated by the decomposition of these refrigerants. In order to trap the thus generated hydrochloric acid, a variety of epoxy compounds, such as phenylglycidyl ether type epoxy compounds, epoxidized fatty acid monoesters, and epoxidized vegetable oils, are generally added to naphthene oil and the like. Alternatively, as disclosed in JP-A-57-63395, a compound having an epoxycycloalkyl group, such as epoxycyclooctane, is added to a polyether compound in order to protect the polyether compound from deterioration by hydrochloric acid.

These prior art epoxy compounds, however, are not so effective when added to the composition of the present invention which comprises a hydrofluorocarbon compound and the aforementioned ester compound and which dose not generate a strong acid such as hydrochloric acid, but instead, generates saturated aliphatic monocarboxylic acid. As a result, it is preferable to use an alicyclic epoxy compound such as epoxycyclooctane, epoxycycloheptane, a compound having an epoxycyclohexyl group, and a compound having an epoxycyclopentyl group, etc. It is particularly preferable to use a compound having an epoxycyclohexyl group and/or a compound having an epoxycyclopentyl group.

A compound having an epoxycyclohexyl group and/or a compound having an epoxycyclopentyl group to be used in the composition of the present invention may have 5 to 40, preferably 5 to 25, carbon atoms. Illustrative examples of such compounds include 1,2-epoxycyclohexane, 1,2-epoxycyclopentane, bis(3,4-epoxycyclohexylmethyl) adipate, bis(3,4-epoxy-6-methylcyclohexylmethyl) adipate, 3,4-epoxycyclohexylmethyl-3,4-epoxycyclohexane carboxylate, exo-2,3-epoxynorbornane, 2-(7-oxabicyclo-[4.1.0]hept-3-yl)-spiro(1,3-dioxane-5,3'-[7]oxabicyclo[4.1.0]heptane), 4-epoxyethyl-1,2-epoxycyclohexane, 4-(1'-methylepoxyethyl)-1,2-epoxy-2-methylcyclohexane and the like. For the present invention, a compound having an epoxycyclohexyl group may be used, either alone, or a mixture of two or more compounds containing an epoxycyclohexyl group can be used. The compound having an epoxycyclopentyl group may be used, either alone, or a mixture of two or more compounds containing an epoxycyclopentyl group can be used. Further, the compound having an epoxycyclohexyl group and the compound having an epoxycyclopentyl group may be used together. These compounds may be used in an amount of from 0.05 to 2.0 parts by weight, preferably from 0.1 to 1.0 parts by weight, based on 100 parts by weight of the ester compound. If necessary, a compound having an epoxycyclohexyl group and/or a compound having an epoxycyclopentyl group may be used together with other epoxy compounds such as glycidyl ether.

The triaryl phosphate and/or a triaryl phosphite useful in the composition of the present invention, may have 18 to 70, preferably 18 to 50, carbon atoms. Illustrative examples of such compounds include: triaryl phosphates such as triphenyl phosphate, tricresyl phosphate, trixylenyl phosphate, cresyldiphenyl phosphate, xylenyldiphenyl phosphate, tris(tribromophenyl) phosphate, tris(dibromophenyl) phosphate, tris(2,4-di-t-butylphenyl) phosphate, trinonylphenyl phosphate and the like; and triaryl phosphites such as triphenyl

phosphite, tricresyl phosphite, trixylenyl phosphite, cresyldiphenyl phosphite, xylenyldiphenyl phosphite, tris(2,4-di-t-butylphenyl) phosphite, trinonylphenyl phosphite, tris(tribromophenyl) phosphite, tris-(dibromophenyl) phosphite and the like. Such a triaryl phosphate and/or a triaryl phosphite may be used in an amount of from 0.1 to 5.0 parts by weight, preferably from 0.2 to 2.0 parts by weight, based on 100 parts by weight of the ester compound.

The benzotriazole and/or a benzotriazole derivative of the present invention may have 6 to 50, preferably 6 to 30, carbon atoms. The Benzotriazole and/or its derivative may be used in an amount of from 0.001 to 0.1 parts by weight, preferably from 0.003 to 0.03 parts by weight, based on 100 parts by weight of the ester compound. Illustrative examples include benzotriazole, 5-methyl-1H-benzotriazole, 1-dioctylaminomethylbenzotriazole, 1-dioctylaminomethyl-5-methylbenzotriazole, 2-(5'-methyl-2'-hydroxyphenyl)-benzotriazole, 2-[2'-hydroxy-3',5'-bis(α,α-dimethylbenzil)phenyl]-2H-benzotriazole, 2-(3',5'-di-t-butyl-2'-hydroxyphenyl)benzotriazole, 2-(3'-t-butyl-5'-methyl-2'-hydroxyphenyl)-5-chlorobenzotriazole, 2-(3',5'-di-t-butyl-2'-hydroxyphenyl)-5-chlorobenzotriazole, 2-(3',5'-di-t-amyl-2'-hydroxyphenyl)-benzotriazole, 2-(5'-t-butyl-2'-hydroxyphenyl)benzotriazole, 2-(2'-hydroxy-5'-methylphenyl)benzotriazole, 2-(2'-hydroxy-5'-t-octylphenyl)benzotriazole, 2-[2'-hydroxy-3'-(3'',4'',5'',6''-tetrahydrophthalimidmethyl)-5'-methylphenyl]-benzotriazole and the like, of which benzotriazole and 5-methyl-1H-benzotriazole are particularly preferred.

The metal deactivator according to the present invention may be used in an amount of from 0.001 to 2.0 parts by weight, preferably from 0.003 to 0.5 part by weight, based on 100 parts by weight of the ester compound. The metal deactivator preferably may possess a chelating function, and may have 5 to 50, preferably 5 to 20, carbon atoms. Illustrative examples of the metal deactivator include N,N'-disalicylidene-1,2-diaminoethane, N,N'-disalicylidene-1,2-diaminopropane, N-salicylidene-N'-dimethyl-1,2-diaminoethane, N,N'-disalicylidenehydrazine, N,N'-bis(α,5-dimethylsalicylidene)-1,2-diaminoethane, N,N'-bis(α,5-dimethylsalicylidene)-1,3-propanediamine, N,N'-bis(α,5-dimethylsalicylidene)-1,6-hexanediamine, N,N'-bis(α,5-dimethylsalicylidene)-1,10-decanediamine, N,N'-bis(α,5-dimethylsalicylidene)ethylenetetraamine, salicylialdoxime, 2-hydroxy-5-methylacetophenoxime, acetylaceton, ethyl acetoacetate, 2-ethylhexyl acetoacetate, dimethyl malonate, diethyl malonate, 2-ethylhexyl malonate, anthranilic acid, nitrilotriacetic acid, dihydroxyethylglycine, hydroxyethylethylenediaminetriacetic acid, hydroxyethyliminodiacetic acid, ethylenediamine, 3-mercapto-1,2-propanediol, alizarin, qunizarin, mercaptobenzothiazole and the like, of which N,N'-disalicylidene-1,2-diaminoethane, N,N'-disalicylidene-1,2-diaminopropane, acetylaceton, acetoacetic ester, alizarin, qunizarin and the like are particularly preferred.

If necessary, other usually additive agents may be used, such as extreme-pressure agents, oiliness improvers, anti-foaming agents, and the like.

Examples of useful extreme-pressure agents and oiliness improvers include zinc compounds, such as zinc dialkyldithiophosphate, zinc diaryldithiophosphate and the like; sulfur compounds, such as thiodipropionic ester, dialkylsulfide, dibenzylsulfide, dialkylpolysulfide, alkylmercaptan, dibenzothiophene, 2,2'-dithiobis(benzothiazole) and the like; phosphorus compounds, such as trialkylphosphite,trialkylphosphate and the like; chlorine compounds, such as chlorinated paraffin and the like; molybdenum compounds, such as molybdenum dithiocarbamate, molybdenum dithiophosphate, molybdenum disulfide and the like; fluorine compounds, such as perfluoroalkyl polyether, trifluoride ethylenechloride polymer, graphite fluoride and the like; silicone compounds such as fatty acid modified silicone and the like; and graphite and the like. These compounds may be used in an amount of from 0.05 to 10 parts by weight, based on 100 parts by weight of the ester compound used in the present invention.

Anti-foaming agents eligible for use in the present invention include silicone oil such as dimethylpolysiloxane and the like; and organosilicates such as diethylsilicate and the like. These compounds may be used in an amount of from 0.0005 to 1 parts by weight, based on 100 parts by weight of the ester compound used in the present invention.

In addition to these additive agents, compounds having an ability to stabilize a refrigerant, such as organic tin compounds, boron compounds and the like, may also be used. These compounds may be used in an amount of from 0.001 to 10 parts by weight, based on 100 parts by weight of the ester compound used in the present invention.

The refrigerator working fluid composition of the present invention may be easily prepared in the usual way by mixing a hydrofluorocarbon compound and the oil of the present invention prepared by adding these additive agents to the inventive ester compound mentioned above. The hydrofluorocarbon/oil mixing ratio may be generally from 5/1 to 1/10 (weight ratio), preferably from 2/1 to 1/5 (weight ratio).

The hydrofluorocarbon compound eligible for use in the composition of the present invention may be selected from 1,1-difluoroethane (HFC 152a), 1,1,1-trifluoroethane (HFC 143a), 1,1,1,2-tetrafluoroethane (HFC 134a), pentafluoroethane (HFC 125), 1,1,2,2-tetrafluoroethane (HFC 134), difluoromethane (HFC 32) and the like, of which 1,1,1,2-tetrafluoroethane is particularly preferred.

In addition to the ester compounds (1) and/or (2), the base oil of the oil used in the present invention may further contain additional esters such as, for example, a hindered ester and a diester. These esters may be present in any mixing ratio, provided that they do not spoil the performance of the base oil, such as interfering with the compatibility of the hydrofluorocarbon compound. The mixing ratio of esters (1) and/or (2) to additional esters by weight ratio, may be in the range of from 100/0 to 5/95, preferably from 100/0 to 10/90, more preferably from 100/ 0 to 30/70.

The composition comprising a hydrofluorocarbon compound and an oil prepared by adding additive agents to the ester compounds (1) and/or (2), is characterized by excellent properties including compatibility, lubricating ability, thermal stability and electrical insulation capacity.

The examples of the present invention are given below by way of illustration and not by way of limitation.

Example 1

A 1 liter capacity four neck flask equipped with a stirrer, thermometer, nitrogen gas sparger and dehydrating tube having a condenser, was charged with 104 g (1.0 mol) of neopentyl glycol, 137.8 g (1.06 mol) of 2-methylhexanoic acid and 62.8 g (0.43 mol) of adipic acid. The contents were allowed to undergo an esterification reaction at 240 °C for 10 hours in a stream of nitrogen to yield an ester A. The same procedure was repeated to obtain esters B to F except that various other alcohols and carboxylic acids shown in Table 1 were used.

The thus obtained esters to be used in the composition of the present invention were checked for their hydroxyl values, kinematic viscosities at 40 and 100 °C, viscosity indexes (JIS K-2283) and pour points (JIS K-2269), with the results shown in Table 1. Also, a low temperature two-phase separation of these esters from 1,1,1,2-tetrafluoroethane was measured at each sample concentration of 10% by volume, with the results also shown in Table 1.

TABLE 1

| Ester | Components (a) | (b) (mol/mol (a)) | (c) or (e) (mol/mol (a)) | (d) (mol/mol (a)) | Viscosity (cst) 40°C | 100°C | Viscosity Index | Pour Point | Two-Phase Separation Temperature (°C) | Hydroxyl Value (mg KOH/g) |
|---|---|---|---|---|---|---|---|---|---|---|
| A | neopentyl glycol | 2-methylhexanoic acid (1.06) | adipic acid (0.43) | — | 23.9 | 5.01 | 141 | -55 > | -60 > | 16.6 |
| B | 2,2-diethyl-1, 3-propanediol | 2-methylhexanoic acid (0.95) | glutaric acid (0.50) | — | 40.1 | 6.66 | 120 | -55 > | -60 > | 9.8 |
| C | neopentyl glycol | 2-ethylhexanoic acid (0.68) | glutaric acid (0.63) | — | 87.2 | 11.7 | 125 | -42.5 > | -60 > | 13.4 |
| D | trimethylol propane | caproic acid (2.41) | adipic acid (0.20) | — | 20.1 | 4.40 | 132 | -55 > | -60 > | 27.3 |
| E | neopentyl glycol | — | adipic acid (1.67) | 2-ethylhexanol (1.40) | 51.2 | 8.43 | 140 | -55 > | -60 > | 7.1 |
| F | 2,2-diethyl-1,3-propanediol | — | glutaric acid (2.00) | 2-methylheptanol (2.16) | 30.7 | 5.70 | 128 | -55 > | -60 > | 14.8 |

Oil samples were prepared by adding additive agents to the ester compounds prepared above. Compositions of these samples are shown in Table 2 (20 samples for use in inventive examples and 6 samples for use in comparative examples). The data in Table 2 show the amount of additive agents expressed as parts by weight per 100 parts by weight of the corresponding ester compound. The following additive agents a to n were used:

a: 2-(7-oxabicyclo[4.1.0]hepto-3-yl)-spiro[1,3-dioxane-5,3'-[7]oxabicyclo[4.1.0]heptane)

b: 4-epoxyethyl-1,2-epoxycyclohexane
c: bis(3,4-epoxycyclohexylmethyl) adipate
d: 1,2-epoxycyclopentane
e: phenylglycidyl ether
f: 2-ethylhexylglycidyl ether
g: tricresyl phosphate
h: trixylenyl phosphate
i: tricresyl phosphite
j: tris(2,4-di-t-butylphenyl) phosphite
k: benzotriazole
l: 5-methyl-1H-benzotriazole
m: N,N'-disalicylidene-1,2-diaminoethane
n: acetylacetone

TABLE 2

| | | Oil Samples for Use in Inventive Examples | | | | | | | | | | | | | | | | | | | | Comparative Oils | | | | | |
|---|---|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 20 | 1 | 2 | 3 | 4 | 5 | 6 |
| Ester | | A | B | C | D | E | F | A | B | D | E | F | C | A | C | A | A | E | A | A | B | A | B | C | D | E | F |
| *1 | a | 0.50 | | | | 0.75 | | 0.50 | | | 0.75 | | | | | | | | | | | | | | | | |
| | b | | 0.20 | | | | | | 0.20 | | | | | 0.50 | | | | | | | | | | | | | |
| | c | | | 0.80 | | | 0.25 | | | | | 0.25 | 0.80 | | 0.80 | 0.25 | 0.50 | | | | | | | | | | |
| | d | | | | 0.30 | | | | | 0.30 | | | | | | | | | | | | | | | | | |
| | e | | | | | | | | | | | | | | | | | | | 0.50 | | | | | | | |
| | f | | | | | | | | | | | | | | | | | | | | 0.20 | | | | | | |
| *2 | g | | | | | | | | | | | | | | | 1.00 | | | 1.00 | | | | | | | | |
| | h | | 0.50 | | | | | | 0.50 | | | | | | | | | | | | | | | | | | |
| *3 | i | | | | | | | | | | | | 1.00 | | 1.00 | | | | | | | | | | | | |
| | j | | | | | 0.30 | | | | | 0.30 | | | | | | | | | | | | | | | | |
| *4 | k | | | | | | | 0.005 | | | 0.005 | 0.01 | | | | | | | | | | | | | | | |
| | l | | | | | | | | 0.01 | 0.005 | | | 0.005 | | | | | | | | | | | | | | |
| *5 | m | | | | | | | | | | | | 0.10 | | 0.10 | | | | | | | | | | | | |
| | n | | | | | | 0.20 | | | | | 0.20 | | | | | | 0.10 | | | | | | | | | |

Notes: *1, epoxy compounds;
*2, phosphates;
*3, phosphites;
*4, benzotriazole derivatives;
*5, metal deactivators

Example 2

Compositions 1 to 16, 19 and 20 of the present invention and comparative compositions 1 to 6 were prepared by mixing 1,1,1,2-tetrafluoroethane (HFC 134a) with each of the oils obtained in Example 1 (oil

Nos. 1 to 16, 19 and 20 for use in inventive examples and oil Nos. 1 to 6 for comparative example use), and were subjected to a sealed tube test under the following conditions in order to examine their resistance to hydrolysis.

A glass tube was charged with 10 g of each oil sample, 5 g of 1,1,1,2-tetrafluoroethane (HFC 134a), 500 ppm of water based on the oil content. Wires of iron, copper and aluminium (1.6 $\phi$, 150 mm) were added as catalysts. The thus prepared tube was sealed. After treating at 175 °C for 14 days, the resulting tube was opened and HFC 134a was removed in order to examine the acid value of the oil. The results are shown in Table 3.

Table 3

| | | Increase in acid values (mg KOH/g) |
|---|---|---|
| Inventive | 1 | 0.05 > |
| | 2 | 0.05 > |
| | 3 | 0.05 > |
| | 4 | 0.05 > |
| | 5 | 0.05 > |
| | 6 | 0.05 > |
| | 7 | 0.05 > |
| | 8 | 0.05 > |
| | 9 | 0.05 > |
| | 10 | 0.05 > |
| | 11 | 0.05 > |
| | 12 | 0.05 > |
| | 13 | 0.05 > |
| | 14 | 0.05 > |
| | 15 | 0.05 > |
| | 16 | 0.05 > |
| | 19 | 0.2 |
| | 20 | 0.1 |
| Comparative | 1 | 1.0 |
| | 2 | 0.8 |
| | 3 | 1.1 |
| | 4 | 1.2 |
| | 5 | 1.1 |
| | 6 | 0.7 |

As is evident from Table 3, inventive compositions 1 to 16 containing compounds having epoxycyclopentyl groups or epoxycyclohexyl groups, as well as inventive compositions 19 and 20, respectively, containing phenylglycidyl ether and 2-ethylhexylglycidyl ether, showed markedly low acid values in comparison with comparative compositions 1 to 6 in which these compounds were not added. Further, these results confirm that use of the composition of the present invention prevents formation of carboxylic acids. Specifically, inventive compositions 1 to 16, containing compounds having epoxycyclopentyl groups or epoxycyclohexyl groups showed lower acid values than compositions 19 and 20. This demonstrates the superior effect of inventive compositions 1 to 16 in preventing carboxylic acid formation, in comparison with the inventive compositions 19 and 20, respectively, containing phenylglycidyl ether and 2-ethylhexylglycidyl ether.

Example 3

The effects of benzotriazole or its derivatives on the prevention of coppering were examined using inventive compositions 7 to 12 which contain these compounds, and inventive compositions 1, 2, 4, 5, 6 and 14 which do not contain these compounds.

A glass tube was charged with 10 g of each oil sample, 5 g of HFC 134a, 1% by weight of 2-methylhexanoic acid copper salt, based on the oil content, and wires of iron, copper and aluminium (1.6 $\phi$, 150 mm) as catalysts. The thus prepared tube was sealed. After treating the tube at 175 °C for 14 days, the

generation of coppering was examined visually. As shown in Table 4, generation of coppering was effectively prevented by the addition of benzotriazole or its derivatives.

Table 4

| | | Coppering |
|---|---|---|
| Inventive | 1 | yes |
| | 2 | yes |
| | 4 | yes |
| | 5 | yes |
| | 6 | yes |
| | 14 | yes |
| | 7 | no |
| | 8 | no |
| | 9 | no |
| | 10 | no |
| | 11 | no |
| | 12 | no |

Example 4

In order to examine the effects of triaryl phosphate and triaryl phosphite on the improvement of abrasion resistance, a Falex test was carried out using inventive compositions 2, 5, 8, 10, 12, 14, 15 and 18, comparative compositions 1 to 6, and other compositions prepared by mixing naphthene oil or a polyether compound with HFC 134a (comparative compositions 7 to 9). 1,1,1,2-Tetrafluoroethane (HFC 134a) was blown in each oil sample at a rate of 150 cc/min. Rotation was continued for 10 minutes with no loading, 5 minutes at 200 lb and then 60 minutes at 350 lb. After the procedure, abrasion degrees of V block and pin were examined, with the results shown in Table 5.

Table 5

| | | Abrasion (mg) |
|---|---|---|
| Inventive | 2 | 3.8 |
| | 5 | 5.1 |
| | 8 | 4.2 |
| | 10 | 5.3 |
| | 12 | 3.0 |
| | 14 | 2.8 |
| | 15 | 3.3 |
| | 18 | 5.3 |
| Comparative | 1 | 13.5 |
| | 2 | 15.3 |
| | 3 | 9.8 |
| | 4 | 14.6 |
| | 5 | 12.7 |
| | 6 | 13.1 |
| | 7*1 | seizure |
| | 8*2 | 46.3 |
| | 9*3 | 41.3 |

*1, naphthene oil (viscosity at 40°C, 30.0 cst)
*2, poly(oxyethyleneoxypropylene)glycol monobutyl ether (viscosity at 40°C, 20.3 cst)
*3, polyoxypropyleneglycol-di-2-ethylhexanate (viscosity at 40°C, 18.3 cst)

As is evident from Table 5, compositions containing triaryl phosphate or triaryl phosphite (inventive compositions 2, 5, 8, 10, 12, 14, 15 and 18) showed markedly improved abrasion resistance. The abrasion resistance of the comparative compositions 1 to 6 which comprise esters of the invention and HFC 134a, was inferior to that of the inventive compositions but sufficiently superior to the other comparative compositions 7 to 9 comprising naphthene oil or a polyether compound and HFC 134a.

Example 5

In order to examine the low temperature compatibility of inventive samples 1 to 20, the low temperature two-phase separation of these oils from 1,1,1,2-tetrafluoroethane was measured at each sample concentration of 10% by volume, with the results shown in Table 6.

Table 6

| | | Low temperature separation (° C) |
|---|---|---|
| Inventive | 1 | -60 > |
| | 2 | -60 > |
| | 3 | -60 > |
| | 4 | -60 > |
| | 5 | -60 > |
| | 6 | -60 > |
| | 7 | -60 > |
| | 8 | -60 > |
| | 9 | -60 > |
| | 10 | -60 > |
| | 11 | -60 > |
| | 12 | -60 > |
| | 13 | -60 > |
| | 14 | -60 > |
| | 15 | -60 > |
| | 16 | -60 > |
| | 17 | -60 > |
| | 18 | -60 > |
| | 19 | -60 > |
| | 20 | -60 > |

As is evident from the results shown in Table 6, all of the inventive samples showed excellent low two-phase temperature separation.

Example 6

Inventive samples 1 to 20 were subjected to a sealed tube test in order to examine their thermal stabilities.

A glass tube was charged with 10 g of each oil sample, 5 g of HFC 134a and wires of iron, copper and aluminium (1.6 $\phi$, 150 mm) as catalysts. The thus prepared tube was sealed. After treating at 175° C for 14 days, the appearance of the composition of HFC 134a and the oil was observed, as well as the presence of a deposit. The results are shown in Table 7.

Table 7

| | | Appearance | Deposit |
|---|---|---|---|
| Inventive | 1 | good | none |
| | 2 | good | none |
| | 3 | good | none |
| | 4 | good | none |
| | 5 | good | none |
| | 6 | good | none |
| | 7 | good | none |
| | 8 | good | none |
| | 9 | good | none |
| | 10 | good | none |
| | 11 | good | none |
| | 12 | good | none |
| | 13 | good | none |
| | 14 | good | none |
| | 15 | good | none |
| | 16 | good | none |
| | 17 | good | none |
| | 18 | good | none |
| | 19 | good | none |
| | 20 | good | none |

As is evident from the results shown in Table 7, all of the inventive samples showed good appearance with no deposit formation, thus confirming their excellent thermal stability.

Thus, it is apparent that there has been provided, in accordance with the present invention, a refrigerator working fluid composition. This composition, which comprises a hydrofluorocarbon compound and an oil prepared by adding additive agents to the ester compounds (1) and/or (2), possesses excellent properties including compatibility, lubricating ability, thermal stability and electrical insulation capacity.

While the invention has been described in detail and with reference to specific examples thereof, it will be apparent to one skilled in the art that various changes and modifications can be made therein, without departing from the spirit and scope thereof.

## Claims

**1.** A refrigerator working fluid composition comprising a refrigerating machine oil and a hydrofluorocarbon compound, wherein said refrigerating machine oil comprises:

(A) 100 parts by weight of at least one ester compound selected from the group consisting of:

(1) ester compounds obtained from

(a) an aliphatic polyhydric alcohol having 1 to 6 primary hydroxyl groups,

(b) a straight or branched chain saturated aliphatic monocarboxylic acid having 2 to 9 carbon atoms or a derivative thereof, and

(c) a straight or branched chain saturated aliphatic dicarboxylic acid having 2 to 10 carbon atoms or a derivative thereof; and

(2) ester compounds obtained from

(a) an aliphatic polyhydric alcohol having 1 to 6 primary hydroxyl groups,

(d) a straight or branched chain saturated aliphatic monohydric alcohol having 1 to 10 carbon atoms, and

(e) a polycarboxylic acid having 2 to 10 carbon atoms or a derivative thereof; and

(B) at least one compound selected from the group consisting of 0.1 to 5.0 parts by weight of a triaryl phosphate, a triaryl phosphite, or a mixture thereof; 0.001 to 0.1 parts by weight of benzotriazole, a derivative thereof, or a mixture of benzotriazole and a derivative thereof; 0.05 to 2.0 parts by weight of an epoxy group-containing compound; and 0.001 to 2.0 parts by weight of a metal deactivator having a chelating function.

**2.** The refrigerator working fluid composition of claim 1, wherein the compound of Component (B) is 0.05

to 2.0 parts by weight of an epoxy group-containing compound.

**3.** The refrigerator working fluid composition of claim 1, wherein the compound of Component (B) comprises 0.05 to 2.0 parts by weight of an epoxy group-containing compound and at least one compound selected from the group consisting of 0.1 to 5.0 parts by weight of a triaryl phosphate, a triaryl phosphite or a mixture thereof; 0.001 to 0.1 part by weight of benzotriazole, a derivative thereof, or a mixture of benzotriazole and a derivative thereof; and 0.001 to 2.0 parts by weight of a metal deactivator having a chelating function.

**4.** The refrigerator working fluid composition of claim 1, wherein said hydrofluorocarbon compound is 1,1,1,2-tetrafluoroethane.

**5.** The refrigerator working fluid composition of claim 1, wherein said epoxy group-containing compound is an alicyclic epoxy compound.

**6.** The refrigerator working fluid composition of claim 5, wherein said alicyclic epoxy compound is a compound having an epoxycyclohexyl group, a compound having an epoxycyclopentyl group, or a mixture thereof.

**7.** The refrigerator working fluid composition of claim 1, wherein said ester compounds (1) are obtained from (f) an aliphatic dihydric alcohol having 1 to 2 primary hydroxyl groups as a member of the component (a), (b) a straight or branched chain saturated aliphatic monocarboxylic acid having 2 to 9 carbon atoms or a derivative thereof, and (g) a straight or branched chain saturated aliphatic dicarboxylic acid having 2 to 8 carbon atoms or a derivative thereof as a member of the component (c), and said ester compound (2) is obtained from (f) an aliphatic dihydric alcohol having 1 to 2 primary hydroxyl groups as a member of the component (a), (d) a straight or branched chain saturated aliphatic monohydric alcohol having 1 to 10 carbon atoms, and (g) a straight or branched chain saturated aliphatic dicarboxylic acid having 2 to 8 carbon atoms or a derivative thereof as a member of the component (e).

**8.** The refrigerator working fluid composition of claim 1, wherein said ester compounds have a hydroxyl value of from 5 to 50 mg KOH/g.

**9.** The refrigerator working fluid composition of claim 7, wherein (f) is neopentyl glycol or 2,2-diethyl-1,3-propanediol, (b) is 2-methylhexanoic acid and (g) is adipic acid or glutaric acid.

**10.** The refrigerator working fluid composition of claim 9, wherein said ester compounds have a hydroxyl value of from 5 to 30 mg KOH/g.

European Patent Office

# EUROPEAN SEARCH REPORT

Application Number

EP 92 10 3253
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,Y | WO-A-9 012 849 (THE LUBRIZOL CORPORATION)<br>* page 22; example 17 *<br>* page 23; example 18 *<br>* page 26, line 9 - line 20 *<br>--- | 1-4,7 | C10M169/04<br>C10M171/00<br>C09K5/04<br>//(C10M169/04,<br>105:42,129:18,<br>133:44,137:02)<br>C10N40:30 |
| Y | PATENT ABSTRACTS OF JAPAN<br>vol. 015, no. 163<br>& JP-A-3 033 192 ( KIYOUSEKI SEIHIN GIJUTSU KENKYUSHO ) 13 February 1991<br>* abstract *<br>--- | 1-4,7 | |
| Y | EP-A-0 384 724 (NIPPON OIL)<br>* page 2, line 19 - line 21 *<br>* page 3, line 15 - line 36 *<br>* page 3, line 50 - line 53 * | 1-4,7 | |
| A | * page 7, line 5 - line 16 *<br>* page 7, line 33 - line 34 *<br>--- | 5 | |
| A | US-A-3 723 320 (J.F HERBER)<br>* column 2, line 37 - line 72 *<br>* column 7, line 21 - line 53 *<br>--- | 1-3,5,6 | **TECHNICAL FIELDS SEARCHED (Int. Cl.5 )** |
| P,X | EP-A-0 435 253 (NIPPON OIL CO.)<br>* page 5, line 11 - line 40 *<br>* page 7, line 28 - line 29 *<br>* page 7, line 41 - line 57 *<br>* page 8, line 6 - line 19 *<br>* page 11, line 30 - page 12, line 22 *<br>--- | 1--7 | C10M<br>C09K |
| P,X | EP-A-0 461 262 (IDEMITSU KOSAN COMPANY LIMITED)<br>* page 4, line 7 - line 12 *<br>* page 4, line 20 - line 32 *<br>* page 4, line 39 *<br>* page 5, line 46 - page 6, line 11 *<br>* page 6, line 38 - line 40 *<br>---<br>-/-- | 1,4,5,6,<br>7,9 | |

The present search report has been drawn up for all claims

| Place of search | Date of completion of the search | Examiner |
|---|---|---|
| THE HAGUE | 28 APRIL 1992 | HILGENGA K.J. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

Application Number

EP 92 10 3253
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 452 509 (IDEMITSU PETROCHEMICAL CO.)<br>* page 4, line 25 - line 30 *<br>* page 4, line 42 - line 49 *<br>* page 5, line 18 *<br>* page 5, line 29 - line 31 *<br>--- | 1,4,5,6,7 | |
| P,X | EP-A-0 415 778 (KAO CORPORATION)<br>* page 5, line 40; claims 1,6,9 *<br>* page 5, line 47 - line 48 *<br>* page 7; example 10; table 1 *<br>--- | 1,4,7,9 | |
| P,X | EP-A-0 440 069 (KAO CORPORATION)<br>* page 5, line 27 *<br>* page 5, line 35; example 1 *<br>--- | 1,4,7 | |
| A | US-A-2 926 139 (F.R MOTT)<br>* Whole document *<br>--- | 1,7 | |
| D,A | EP-A-0 406 479 (KYODO OIL TECHNICAL RESEARCH CENTER)<br>* page 3, line 42 - line 54 *<br>* page 4, line 7 - line 12 *<br>* page 7; examples A-5,A-6; table 1 *<br>--- | 1,4,7,8,10 | TECHNICAL FIELDS SEARCHED (Int. Cl.5) |
| A | WORLD PATENTS INDEX LATEST<br>Week 8805,<br>Derwent Publications Ltd., London, GB;<br>AN 88-033105<br>& JP-A-62 292 895 (NIPPON OIL & FATS) 19 December 1987<br>* abstract *<br>----- | 1-3 | |

The present search report has been drawn up for all claims

| Place of search | Date of completion of the search | Examiner |
|---|---|---|
| THE HAGUE | 28 APRIL 1992 | HILGENGA K.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)